# EUROPÄISCHE PATENTSCHRIFT

(11) **EP 1 390 629 B1**
(45) Veröffentlichungstag und Bekanntmachung des Hinweises auf die Patenterteilung: **13.10.2004**
(21) Anmeldenummer: 02735399.4
(22) Anmeldetag: 31.05.2002
(51) Int. Cl.: F16C 33/20

(54) **GLEITLAGERVERBUNDWERKSTOFF MIT EINER METALLISCHEN STÜTZSCHICHT**
COMPOSITE MATERIAL FOR A SLIDING BEARING COMPRISING A METALLIC SUPPORT LAYER
MATERIAU COMPOSITE DE PALIER A GLISSEMENT COMPORTANT UNE COUCHE DE PROTECTION METALLIQUE

(30) Priorität: 31.05.2001 DE 10126460
(43) Veröffentlichungstag der Anmeldung: 25.02.2004
(73) Patentinhaber: KS Gleitlager GmbH, 68789 St. Leon-Rot (DE)
(72) Erfinder: BICKLE, Wolfgang, 68799 Reilingen (DE); SCHUBERT, Werner, 69168 Wiesloch (DE); STORCH, Thomas, 68782 Brühl (DE)
(74) Vertreter: Friz, Oliver
(86) Internationale Anmeldenummer: PCT/EP2002/005995
(87) Internationale Veröffentlichungsnummer: WO 2002/099298

(56) Entgegenhaltungen:
- EP-A- 0 232 922
- EP-A- 0 234 602
- WO-A-95/02772
- WO-A-99/01675
- WO-A-99/45285
- DE-A- 3 343 697
- DE-A- 19 654 102
- DE-A- 19 728 131
- DE-A- 19 745 667
- US-A- 4 371 445
- US-A- 5 401 574
- US-A- 5 750 221
- US-A1- 2001 031 596

## Beschreibung

Die Erfindung betrifft einen Gleitlagerverbundwerkstoff mit einer metallischen Stützschicht, einer darauf aufgebrachten porösen Trägerschicht und einer eine Gleitfläche für einen Gleitpartner bildenden auf PTFE-Basis beruhenden Gleitschicht, wobei das die Gleitschicht bildende Gleitschichtmaterial auch die Poren der Trägerschicht ausfüllt und wenigstens 60 Vol.-% PTFE und 10 - 25 Vol.-% Zinksulfid umfasst.

Ein derartiger Gleitlagerverbundwerkstoff ist beispielsweise aus EP 0 232 922 B1 bekannt. Zwar ist dort ein Mindestgehalt von 60 Vol.-% PTFE nicht erwähnt. Die Anmelderin fertigt jedoch seit langem einen Gleitlagerverbundwerkstoff bestehend aus 75 Vol.-% PTFE und 25 Vol.-% ZnS. In der genannten Patentschrift findet sich noch der Hinweis, dass als Füllstoffe zusätzlich 5 bis 40 Vol.-% Aramidfasern, Carbonfasern, Glasfasern enthalten sein können.

EP 0 708 892 B1 offenbart einen nicht gattungsgemäßen Gleitlagerverbundwerkstoff, dessen Gleitschichtmaterial PTFE und 2 bis 20 Vol.-% fibrillierter Aramidfasern umfasst. Die Ausführungsbeispiele umfassen neben PTFE noch PPS bzw. PFA bzw. Calciumfluorid in verschiedenen Anteilen. Weitere Hinweise lassen sich dieser Druckschrift nicht entnehmen.

WO 99/45285 offenbart einen nicht gattungsgemäßen Gleitlagerverbundwerkstoff, dessen Gleitschichtmaterial PTFE 10 bis 30 Vol.-% eines Metallfluorids, insbesondere Calciumfluorid, und 2 bis 10 % fibrillierte Aramidfasern sowie 2 bis 10 % eines schmelzbaren Fluorpolymers, FEP, PFA oder MFA, wobei FEP bevorzugt sei, umfassen soll. Konkret offenbart ist ein Ausführungsbeispiel mit 4 Vol.-% Aramidfasern, 7 Vol.-% FEP, 18 Vol.-% CaF, Rest PTFE.

WO 99/01675 offenbart einen Gleitlagerverbundwerkstoff, dessen Gleitschichtmaterial wenigstens 60 Vol.-% PTFE, 15 bis 25 Vol.-% eines metallischen Füllstoffs, vorzugsweise Blei, und gegebenenfalls 8 bis 12 Vol.-% PVDF sowie 1 bis 3 Vol.-% in einer Vorzugsrichtung orientierte Kohlenstofffasern umfasst. Es findet sich der Hinweis, dass auch Zinksulfid als metallischer Füllstoff verwendet werden kann. Diese Druckschrift ist daher gattungsgemäß.

DE 693 27 377 T2 offenbart einen Gleitlagerverbundwerkstoff mit metallischer Stützschicht und poröser Trägerschicht und mit einer Gleitschicht, wobei das Gleitschichtmaterial als Hauptkomponente PTFE umfasst. Es ist ferner Zinkoxid-Whisker und Magnesiumoxysulfat vorgesehen, um die schlechte Verschleißbeständigkeit des PTFE zu verbessern. Nach einer Ausführungsvariante ist neben einer zur Auswahl stehenden Vielzahl weiterer Komponenten Zinksulfid erwähnt. Ein einziges Ausführungsbeipiel enthält PFA in der Zusammensetzung 65 Gew.-% PTFE, 15 Gew.-% Zinkoxid-Whisker, 5 Gew.-% MgO und 20 Gew.-% PFA.

DE 33 43 697 A1 offenbart ebenfalls einen Gleitlagerverbundwerkstoff mit Stützschicht und Trägerschicht sowie einer Gleitschicht, deren Gleitschichtmaterial ein Gemisch aus den folgenden Komponenten aufweist: 0,1 bis 50 Vol.-% von mindestens einer Masse aus der Gruppe FEP, PFA, ETFE, PVDF, PCTFE und EPE besteht ; 0,1 bis 35 Vol. -% von mindestens einer Masse aus der Gruppe feste Schmiermittel, wie metallische Schmiermittel mit niedrigem Schmelzpunkt, wie Pb, Sn oder ihre Legierungen, Metalloxide, Metallsulfide, Metallfluoride, Graphit oder dergleichen, faserförmige Materialien, wie Kohlenstofffasern, und Keramika, wie SiC; und im Rest im wesentlichen PTFE, wobei die Gesamtmenge der Gehalte der Massen, ausgenommen PTFE, im Bereich von 0,2 bis 70 Vol.-% liegt.

Die Druckschrift DE 197 45 667 A1 erwähnt ein polymeres Beschichtungssystem, das für eine Vielzahl von Anwendungen darunter auch für Gleitlageranwendungen in Frage kommt. Offenbart sind Zusammensetzungen, mit weniger als 40 Gew.-% PTFE und mehr als 30 Gew.-% PFA sowie mit 10 bzw- 20 Gew.-% PAI und PPSO₂ mit Gehalten von 2,5, 5, 10 bzw. 20 Gew.-% (Tabellen 2 und 3). Ferner sind offenbart Zusammensetzungen mit mindestens 60 Gew.-% PTFE, 20 Gew.-% PAI und 2,5, 5, 10 bzw. 20 Gew.-% PPSO₂ (Tabelle 1).

DE 197 28 131 A1 offenbart ein Implantatlager für den künstlichen Gelenkersatz beim Menschen, wobei als Füllstoff bei einem Basispolymer zum Beispiel PPSO₂ genannt ist.

US-A-5,750,221 A offenbart ein Gleitmaterial für die Hülle eines Bowdenzugs mit 1-25 Gew.-% PPSO₂ als Füllstoff; weiter können bis zu 15 Gew.-% anderer Füllstoffe zugefügt werden.

DE 196 54 102 A1 beschreibt Fluorpolymermischungen mit PTFE und PPSO₂. Es werden z.B. 25 Gew.-% PPSO₂ verwendet. Neben einer Vielzahl von Anwendungen sind Lagerwerkstoffverwendungen genannt.

Hiervon ausgehend liegt der vorliegenden Erfindung die Aufgabe zugrunde, einen Gleitlagerverbundwerkstoff der eingangs genannten Art zu schaffen, der einen hohen Verschleißwiderstand und einen dennoch geringen Reibwert aufweist.

Diese Aufgabe wird bei einem gattungsgemäßen Gleitlagerverbundwerkstoff erfindungsgemäß dadurch gelöst, dass das Gleitschichtmaterial desweiteren 1,5 - 3,5 Vol.-% Carbon-Fasern und 3 - 7 Vol.-% PPSO₂ aufweist.

Die Erhöhung des Verschleißwiderstands einerseits und die Beibehaltung eines geringen Reibwerts und damit die Erreichung von tribologisch geeigneten Eigenschaften sind in der Praxis gegenläufig zu erreichende Ziele. Beispielsweise hat ein Gleitlagerverbundwerkstoff allein auf PTFE-Basis einen hervorragenden Reibwert, der Verschleißwiderstand ist jedoch nicht zufriedenstellend und kann durch Zugabe von Füllstoffen, beispielsweise metallische Füllstoffe verbessert werden. Durch metallische Füllstoffe wird nämlich die Wärmeabführung verbessert und dadurch die Betriebstemperaturen geringer gehalten, was einen höheren Veschleißwiderstand bedeutet.

Des weiteren ist es - wie eingangs erwähnt - beispielsweise bekannt, zur Erhöhung des Verschleißwirderstandes faserige Füllstoffe, insbesondere Carbon-Fasern zuzusetzen. Wenn jedoch der Carbon-Faseranteil hoch ist, insbesondere 4 Vol.-% und mehr beträgt, so wird hierdurch zwar der Verschleißwiderstand erhöht, der Reibwert wird aber stark beeinträchtigt. Ferner bringt die Zugabe von faserigen Füllstoffen das Problem mit sich, dass die Fasern nicht ohne weiteres in dem Gleitschichtmaterial gehalten oder verankert werden können und potentielle Ermüdungsstellen darstellen. Deshalb wurde mit der eingangs erwähnten WO 99/45285 der Vorschlag unterbreitet, sogenannte "fibrillierte" Aramidfasern einzusetzen, die aufgrund ihrer sehr stark vergrößerten Oberfläche eine bessere Einbindung in dem Gleitschichtmaterial erfahren.

Mit der vorliegenden Erfindung wurde erkannt, dass optimale Ergebnisse dann erzielt werden, wenn der Carbonfaseranteil mindestens 1,5 Vol.-% und höchstens 3,5 Vol.-% beträgt und wenn zusätzlich 3 bis 7 Vol.-% PPSO₂ in dem Gleitschichtmaterial enthalten sind. Es wurde festgestellt, dass durch den Zusatz von PPSO₂ als neben den Carbon-Fasern weiterer gegenüber PTFE abriebfesterer Komponente eine Verschleißminderung also eine Erhöhung des Verschleißwiderstands erreicht werden kann.

Es wurde erfindungsgemäß ein Gleitschichtmaterial geschaffen, welches trotz des nicht allzu hohen Carbon-Faseranteils von 1,5 bis 3,5 Vol.-%, durch den Zusatz von PPSO₂ einen hohen Verschleißwiderstand aufweist.

Nach einer bevorzugten Ausführungsform der Erfindung umfaßt das Gleitschichtmaterial 3 - 6, vorzugsweise 4 - 6 Vol.-% PPSO₂.

Optimale Eigenschaften des Gleitschichtmaterials im Hinblick auf einen möglichst hohen Verschleißwiderstand und einen dabei dennoch guten Reibwert werden mit einem Carbon-Faseranteil von 2,5 bis 3,5 Vol.-% erreicht.

Es werden vorzugsweise Carbon-Fasern einer Dicke von 10 - 20 µm, insbesondere von 10-16 µm und besonders bevorzugtermaßen von 12 - 16 µm eingesetzt. Die Länge der Carbon-Fasern beträgt insbesondere 100 - 250 µm, vorzugsweise 100 - 200 µm und besonders bevorzugtermaßen 100 - 160 µm. Wenn die Fasern zu lang sind, so bereitet es Schwierigkeiten, die Fasern in die Poren der Trägerschicht einzubringen. Wenn die Fasern zu kurz sind, so tragen sie nicht zur Tragfestigkeit bei und lassen sich schlechter im Matrixmaterial verankern.

Das Gleitschichtmaterial umfasst vorzugsweise 65 bis 85 Vol.-% PTFE, insbesondere 70 bis 77 Vol.-% PTFE.

Nach einer weiteren Ausführungsform der Erfindung beträgt der Zinksulfid-Anteil 15 bis 20 Vol.-%.

Vorteilhafterweise ist die mittlere Korngröße der verwendeten Zinksulfid-Partikel, gemessen im Zentrifugenverfahren nach DIN ISO 9001, kleiner als 1 µm, vorzugsweise liegt sie zwischen 0,2 und 0,5 µm. Es wurde festgestellt, dass die Zugabe von Zinksulfid die Vereinzelung und damit die homogene Vermischung der Carbon-Fasern mit den weiteren Komponenten unterstützt. Man erkennt unter dem Mikroskop, dass sich die feinen Zinksulfid-Partikel quasi benetzend an die Oberfläche der Carbon-Fasern anlagern bzw. dort anhaften. Hierdurch wird eine homogene Verteilung und individuelle Einbindung der Carbon-Fasern im Matrixverbund verbessert. Es zeigt sich auch, dass bei Verwendung feinkörniger Zinksulfid-Partikel die Quellneigung des Verbundwerkstoffs im Betrieb verringert ist.

Weitere Merkmale, Einzelheiten und Vorteile der Erfindung ergeben sich aus den Patentansprüchen und aus der nachfolgenden Beschreibung und zeichnerischen Darstellung einer bevorzugten Ausführungsform des erfindungsgemäßen Gleitlagerverbundwerkstoffs.

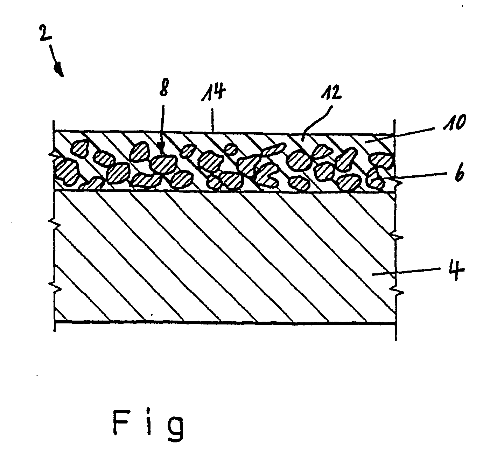

Die Figur zeigt einen insgesamt mit dem Bezugszeichen 2 bezeichneten Gleitlagerverbundwerkstoff mit einer metallischen Stützschicht 4 aus Stahl und einer darauf aufgebrachten porösen Trägerschicht 6, vorzugsweise aus einer bleifreien Bronzeschicht, beispielsweise mit 90 Gew.-% Kupfer und 10 Gew.-% Zink. In die der Stützschicht 4 gegenüberliegende Oberseite 8 der Trägerschicht 6 ist ein Gleitschichtmaterial 10 in die Poren der Trägerschicht 6 eingebracht. Das Gleitschichtmaterial 10 steht geringfügig über die Oberseite 8 der Trägerschicht 6 vor und bildet eine Gleitschicht 12 mit einer Gleitfläche 14 für einen nicht dargestellten Gleitpartner. Das Gleitschichtmaterial 10 weist eine PTFE-Matrix mit wenigstens 60 Vol.-% PTFE und 10 bis 25 Vol.-% Zinksulfid und erfindungsgemäß 1,5 bis 3,5 Vol.-% Carbon-Fasern und 3 bis 7 Vol.-% PPSO₂ auf. Eine bevorzugte Zusammensetzung des Gleitschichtmaterials umfasst 65 bis 85 Vol.-% Matrix bildendes PTFE, 10 bis 25 Vol.-% ZnS, 1,5 bis 3,5 Vol.-% Carbon-Fasern und 3 - 7 Vol.-% PPSO₂. Das Gleitschichtmaterial besteht vorzugsweise aus den vorstehend genannten Komponenten.

Eine bevorzugte beispielhafte Zusammensetzung beträgt 72 Vol.-% PTFE, 20 Vol.-% ZnS, 3 Vol.-% Carbon-Fasern und 5 Vol.-% PPSO₂.

## Patentansprüche

1. Gleitlagerverbundwerkstoff (2) mit einer metallischen Stützschicht (4), einer darauf aufgebrachten porösen Trägerschicht (6) und einer eine Gleitfläche (14) für einen Gleitpartner bildenden auf PTFE-Basis beruhenden Gleitschicht (12), wobei das die Gleitschicht (12) bildende Gleitschichtmaterial (10) auch die Poren der Trägerschicht (6) ausfüllt und wenigstens 60 Vol.-% PTFE und 10 - 25 Vol.-% Zinksulfid umfasst,
**dadurch gekennzeichnet,**
**dass** das Gleitschichtmaterial (10) desweiteren 1,5 - 3,5 Vol.-% Carbon-Fasern und 3 - 7 Vol.-% PPSO₂ aufweist.

2. Gleitlagerverbundwerkstoff (10) nach Anspruch 1, **dadurch gekennzeichnet, dass** das Gleitschichtmaterial 4 - 6 Vol.-% PPSO₂ umfasst.

3. Gleitlagerverbundwerkstoff nach Anspruch 1 oder 2, **dadurch gekennzeichnet, dass** das Gleitschichtmaterial 2,5 bis 3,5 Vol.-% Carbon-Fasern umfasst.

4. Gleitlagerverbundwerkstoff nach Anspruch 1, 2 oder 3, **dadurch gekennzeichnet, dass** das Gleitschichtmaterial 65 - 85 Vol.-% PTFE umfasst.

5. Gleitlagerverbundwerkstoff nach Anspruch 4, **dadurch gekennzeichnet, dass** das Gleitschichtmaterial 70 - 77 Vol.-% PTFE umfasst.

6. Gleitlagerverbundwerkstoff nach einem der vorstehenden Ansprüche, **dadurch gekennzeichnet, dass** das Gleitschichtmaterial 15 - 22 Vol.-% Zinksulfid umfasst.

7. Gleitlagerverbundwerkstoff nach einem oder mehreren der vorstehenden Ansprüche, **dadurch gekennzeichnet, dass** die mittlere Korngröße der verwendeten Zinksulfid-Partikel < 1 µm ist.

8. Gleitlagerverbundwerkstoff nach Anspruch 7, **dadurch gekennzeichnet, dass** die mittlere Korngröße der Zinksulfid-Partikel zwischen 0,2 und 0,5 µm liegt.

9. Gleitlagerverbundwerkstoff nach einem oder mehreren der vorstehenden Ansprüche, **dadurch gekennzeichnet, dass** die Dicke der Carbon-Fasern 10 - 20 µm, insbesondere 10 - 16 µm beträgt.

10. Gleitlagerverbundwerkstoff nach einem oder mehreren der vorstehenden Ansprüche, **dadurch gekennzeichnet, dass** die Länge der Carbon-Fasern 100 - 250 µm, insbesondere 100 - 200 µm, insbesondere 100 - 160 µm beträgt.

## Claims

1. Composite material (2) for a sliding bearing comprising a metallic support layer (4), a porous carrier layer (6) applied thereon, and a PTFE-based sliding layer (12) forming a sliding surface (14) for a sliding partner, wherein the material (10) forming the sliding layer (12) also fills the pores of the carrier layer (6), and comprises at least 60 vol. % PTFE and 10 to 25 vol. % zinc sulphide, **characterised in that** the sliding layer material (10) also comprises 1.5 to 3.5 vol. % carbon fibres, and 3 to 7 vol. % PPSO₂.

2. Composite material (10) for a sliding bearing according to claim 1, **characterised in that** the sliding layer material comprises 4 to 6 vol. % PPSO₂.

3. Composite material for a sliding bearing according to either claim 1 or claim 2, **characterised in that** the sliding layer material comprises 2.5 to 3.5 vol. % carbon fibres.

4. Composite material for a sliding bearing according to claim 1, 2 or 3, **characterised in that** the sliding layer material comprises 65 to 85 vol. % PTFE.

5. Composite material for a sliding bearing according to claim 4, **characterised in that** the sliding layer material comprises 70 to 77 vol. % PTFE.

6. Composite material for a sliding bearing according to any one of the preceding claims, **characterised in that** the sliding layer material comprises 15 to 22 vol. % zinc sulphide.

7. Composite material for a sliding bearing according to any one or more of the preceding claims, **characterised in that** the average particle size of the zinc sulphide particles used is < 1 µm.

8. Composite material for a sliding bearing according to claim 7, **characterised in that** the average particle size of the zinc sulphide particles used is between 0.2 and 0.5 µm.

9. Composite material for a sliding bearing according to any one or more of the preceding claims, **characterised in that** the carbon fibres are between 10 and 20 µm, in particular between 10 and 16 µm, thick.

10. Composite material for a sliding bearing according to any one or more of the preceding claims, **characterised in that** the carbon fibres are between 100 and 250 µm, in particular between 100 and 200 µm, especially between 100 and 160 µm, long.

## Revendications

1. Matériau composite de palier à glissement (2) comportant une couche d'appui métallique (4), une couche support (6) poreuse appliquée sur ladite couche d'appui et une couche de glissement (12) à base de PTFE formant une surface de glissement (14) pour un élément glissant antagoniste, le matériau (10) qui compose la couche de glissement (12) remplissant également les pores de la couche support (6) et contenant au moins 60 % en volume de PTFE et 10 à 25 % en volume de sulfure de zinc,
**caractérisé en ce que**
le matériau de la couche de glissement (10) contient en outre 1,5 à 3,5 % en volume de fibres de carbone et 3 à 7 % en volume de PPSO₂.

2. Matériau composite de palier à glissement (2) selon la revendication 1, **caractérisé en ce que** le matériau de la couche de glissement contient 4 à 6 % en volume de PPSO₂.

3. Matériau composite de palier à glissement selon la revendication 1 ou la revendication 2, **caractérisé en ce que** le matériau de la couche de glissement contient 2,5 à 3,5 % en volume de fibres de carbone.

4. Matériau composite de palier à glissement selon la revendication 1, 2 ou 3, **caractérisé en ce que** le matériau de la couche de glissement contient 65 à 85 % en volume de PTFE.

5. Matériau composite de palier à glissement selon la revendication 4, **caractérisé en ce que** le matériau de la couche de glissement contient 70 à 77 % en volume de PTFE.

6. Matériau composite de palier à glissement selon l'une quelconque des revendications précédentes, **caractérisé en ce que** le matériau de la couche de glissement contient 15 à 22 % en volume de sulfure de zinc.

7. Matériau composite de palier à glissement selon l'une ou plusieurs des revendications précédentes, **caractérisé en ce que** la granulométrie moyenne des particules de sulfure de zinc employées est inférieure à 1 µm.

8. Matériau composite de palier à glissement selon la revendication 7, **caractérisé en ce que** la granulométrie moyenne des particules de sulfure de zinc est comprise entre 0,2 et 0,5 µm.

9. Matériau composite de palier à glissement selon l'une ou plusieurs des revendications précédentes, **caractérisé en ce que** l'épaisseur des fibres de carbone est comprise entre 10 et 20 µm et en particulier entre 10 et 16 µm.

10. Matériau composite de palier à glissement selon l'une ou plusieurs des revendications précédentes, **caractérisé en ce que** la longueur des fibres de carbone est comprise entre 100 et 250 µm, en particulier entre 100 et 200 µm et de préférence entre 100 et 160 µm.
